# EUROPEAN PATENT APPLICATION

(11) **EP 2 665 328 A1**
(43) Date of publication of application: **20.11.2013**
(21) Application number: 13001953.2
(22) Date of filing: 15.04.2013
(51) Int. Cl.: H04W 76/02, H04W 24/10

(54) **Method and apparatus for logging instances of a UE failing to establish connection in a wireless communication network**

(30) Priority: 16.04.2012 US 201261624596 P
(71) Applicant: Innovative Sonic Corporation, Taipei City 10049 (TW)
(72) Inventor: Guo, Yu-Hsuan, 10049 Taipei City (TW); Ou, Meng-Hui, 10049 Taipei City (TW)
(74) Representative: Hoefer & Partner

(57) **Abstract**

A method and apparatus are disclosed for logging instances of a UE (User Equipment) (112, 116, 250) failing to establish connection in a wireless communication network. The method includes logging, in an error log, a failure of a first RRC (Radio Resource Control) connection establishment procedure caused by a first reason, and not logging a failure of a second RRC connection establishment procedure caused by a second reason.

## Description

### CROSS-REFERENCE TO RELATED APPLICATIONS

The present Application claims the benefit of U.S. Provisional Patent Application Serial No. No. 61/624,596 filed on April 16, 2012, the entire disclosure of which is incorporated herein by reference.

### FIELD

This disclosure generally relates to wireless communication networks, and more particularly, to a method and apparatus for logging instances of a UE (User Equipment) failing to establish connection in a wireless communication network.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

A method and apparatus are disclosed for logging instances of a UE (User Equipment) failing to establish connection in a wireless communication network. The method includes logging, in an error log, a failure of a first RRC (Radio Resource Control) connection establishment procedure caused by a first reason, and not logging a failure of a second RRC connection establishment procedure caused by a second reason.

### BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. RP-120277, "Enhancement of Minimization of Drive Tests for E-UTRAN and UTRAN"; R2-120507, "Accessibility measurements for MDT", Ericsson, ST-Ericsson; R2-121598, "Report e-mail discussion [77#23] - Joint: MDT Accessibility Measurements", Ericsson; RAN2-77bis Meeting Notes (see http://www.3gpp.org/ftp/tsg_ran/WG2_RL2/TSGR2_77bis/Report/R2-123095.zip); TS 36.331 V10.5.0, "E-UTRA RRC protocol specification (Release 10)"; TS 36.304 V10.5.0, "UE procedures in idle mode"; and TS 25.331 V10.7.0, "RRC protocol specification (Release 10)". The standards and documents listed above are hereby expressly incorporated herein.

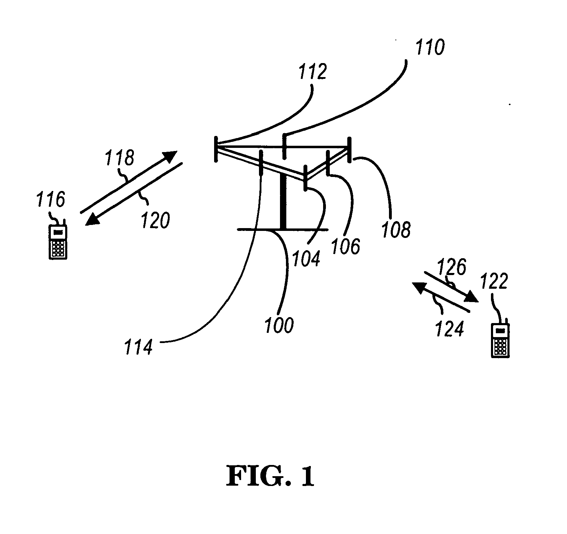

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

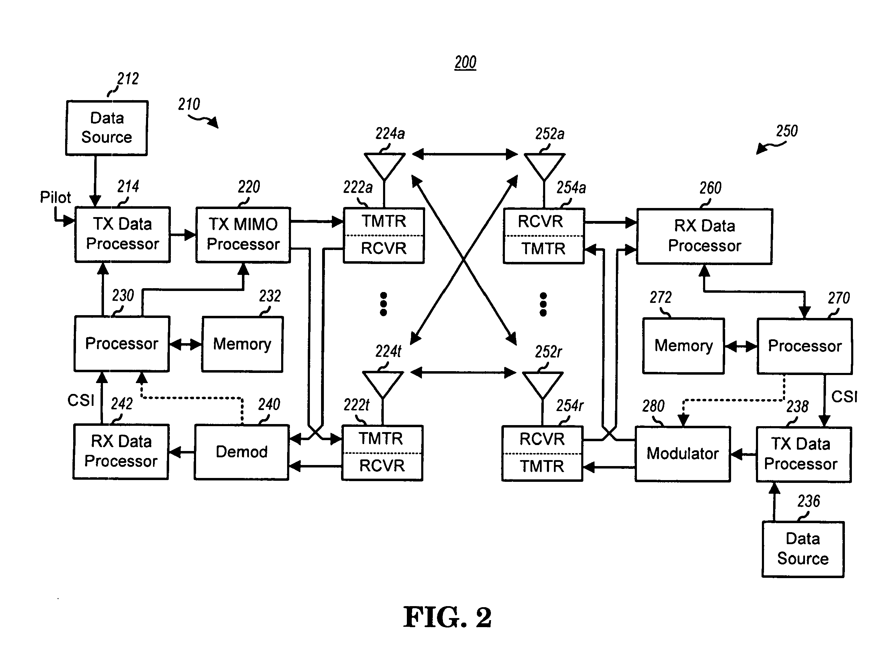

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides N_{T} modulation symbol streams to N_{T} transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, fiiters, and upconverts) the analog signals to provide a modulated signal suitable for transmission over the MIMO channel. N_{T} modulated signals from transmitters 222a through 222t are then transmitted from N_{T} antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

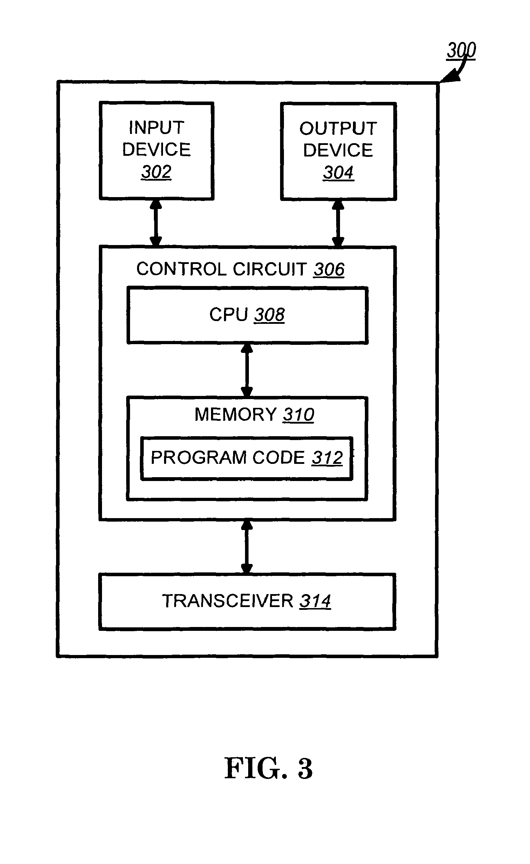

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

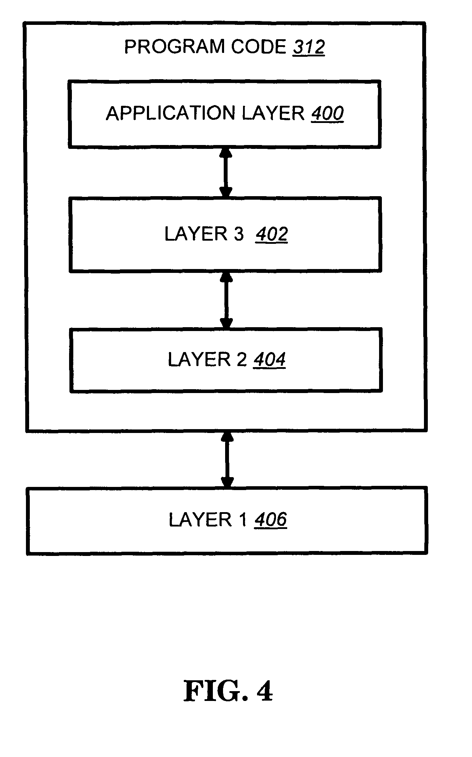

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

A work item "Enhancement of Minimization of Drive Tests for E-UTRAN and UTRAN" (3GPP RP-120277) is currently under discussion for Rel-11. QoS improvement is one key area for MDT enhancement. 3GPP RP-120277 mentions that the following aspect should be considered for QoS (Quality of Service):
- It should be taken into account user-perceived non-availability of connection, e.g. at lack of coverage, frequent connection recovery or frequent handover. The actual coverage is assumed to be verified primarily with other (than QoS) measurements defined for coverage optimization use case.

Therefore, as seen in 3GPP R2-120507 and R2-121598, the discussion of MDT accessibility measurement was triggered based on this aspect. Several agreements for MDT accessibility measurement were made during RAN2#77bis meeting (as seen in RAN2-77bis Meeting Notes), including:
- Logging of failed RRC (Radio Resource Control) Connection establishments will be supported for LTE and UMTS (Universal Mobile Telecommunications System), i.e., a log will be created when the RRC connection establishment procedure fails.
- FFS whether the MDT (Minimization of Drive Test) log should allow to distinguish whether the RACH (Random Access Channel) procedure was not successful or whether T300 expired.
- The UE should always log failed RRC Connection Establishments, i.e., the NW does not need to explicitly configure this log.
- FFS whether we realize this as a logged MDT report or as a separate procedure, such as RLF (Radio Link Failure) reports.

According to the current agreements, a log will be created when the RRC connection establishment procedure fails in any reason. The purpose for logging of failed RRC connection establishment is to report the occurrences the accessibility issues to the network. The network could then analyze the reported information and try to prevent the issues from happening again.

However, the cost of this mechanism includes at least the occupancy of UE memory used to store the information and the consumption of radio resource used to transmit the information. Therefore, carefully evaluation should be made to determine whether it would be worthwhile to log and report every failure of RRC connection establishment mentioned above. In the current LTE RRC specification (3GPP TS 36.331 V10.5.0), a RRC connection establishment procedure would fail, e.g. failure to establish the RRC connection, in the following cases:
- Access barring by the cell that a UE tries to establish connection;
- Cell reselection occurs during the RRC connection establishment procedure;
- Timer T300 expiry; and
- Reception of a *RRCConnectionReject* message.

Below is the evaluation of whether logging is beneficial for different failure cases:

| **Failure cases** | **Evaluation** |
|---|---|
| Access barring by the cell that a UE tries to establish connection | Network uses parameters (as specified in 3GPP TS 36.331 V10.5.0) broadcasted in system information to control the access barring. So, network can know the probability of failed RRC connection establishment based on the values of the parameters. Reporting this failure case may not provide much useful information because failure is expected by network. Otherwise, further information that network does not have should also be provided to help network analysis. |
| Cell reselection occurs during the RRC connection establishment procedure | Cell reselection mainly depends on the location of the UE. Reporting this failure case may not be beneficial if the coverage is stable and well known by the network. Otherwise, if current measurement for coverage (as specified in 3GPP TS 36.331 V10.5.0), e.g., log MDT, is considered insufficient, it may be beneficial to report this case. Further information which may affect cell reselection could also be provided to help network analysis. |
| Timer T300 expiry | This is the case network cannot be aware. So, it is beneficial to report this case. |
| Reception of a *RRCConnectionReject* message | This is the case fully controlled by network and especially the message is dedicated for a specific UE. So, it provides no benefit to report this case because everything is known by network. |

In general, the concept of the invention is that the determination of whether to perform logging a failure of RRC connection establishment depends on the cause of failure. As examples, the failure can be logged if the cause is Timer T300 expiry; the failure may not be logged if the cause is the reception of a *RRCConnectionReject* message; or the failure may or may not be logged if the cause is access barring or cell reselection.

In one embodiment, when logging a failure of RRC connection establishment caused by access barring, some specific information should also be logged. The specific information may be the reason for connection establishment (such as, for mobile terminating call, emergency call, mobile originating call, mobile originating signalling, or mobile originating CS fall-back as specified in 3GPP TS 36.331 V10.5.0). The specific information may also be whether a timer (e.g., T303, T305, or T306 as specified in 3GPP TS 36.331 V10.5.0) is running. In addition, the specific information may be which kind of access barring is applicable. Based on the specific information, network may be able to adjust the access barring parameters to improve accessibility.

In another embodiment, when logging a failure of RRC connection establishment caused by cell reselection, some specific information should also be logged. The specific information may be the target cell of cell reselection. The specific information may also be the mobility state of the UE, such as High-mobility state, Medium-mobility state, or Normal-mobility state (as specified in 3GPP TS 36.304 V 10.5.0). The mobility state of the UE may be logged when the detailed location information is not available. Based on the specific information, network may be able to adjust the coverage development or cell reselection parameters to improve accessibility, such as to prevent ping pong issue.

The same concept could also be applied to UMTS (as specified in 3GPP TS 25.331 V10.7.0). The failure of RRC connection establishment can be logged if the cause is that retry for the transmission of a RRC Connection Request message reaches a specific value (e.g., V300 is greater than N300). The failure is not logged if the cause is the reception of an information element "wait time" with the value zero (0) which is included in a RRC Connection Reject message. It is because the case of rejecting a UE by setting wait time to zero (0) is known by network.

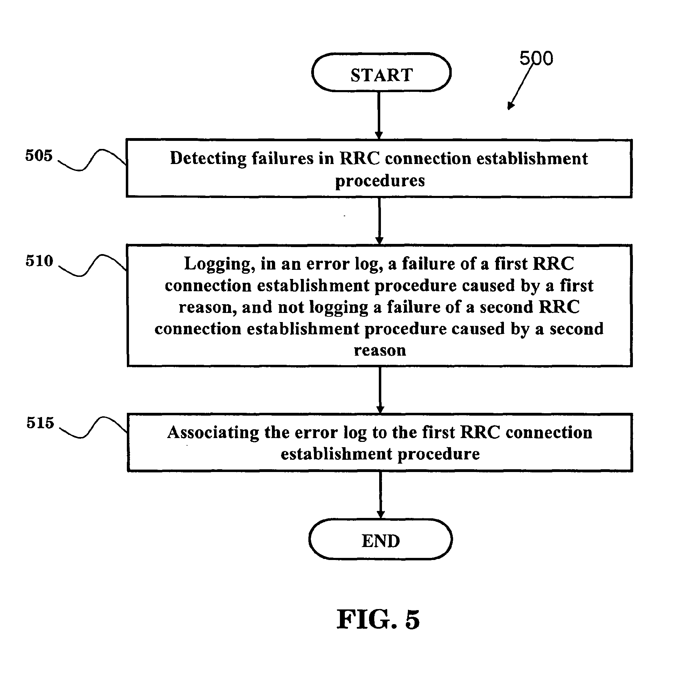

FIG. 5 is a flow chart 500 according to one exemplary embodiment. In step 505, occurrences of failures in RRC (Radio Resource Control) connection establishment procedures are detected. In step 510, the failure of a first RRC connection establishment procedure would be logged if the failure is caused by a first reason. Furthermore, the failure of a second RRC connection establishment procedure would not be logged if the failure is caused by a second reason. In step 515, the error log is associated to the first RRC connection establishment procedure.

In one embodiment, the first reason could be one or more reasons, including (i) a timer T300 expiry during the first RRC connection establishment procedure, (ii) an occurrence of cell reselection during the first RRC connection establishment procedure, and/or (iii) retry for the transmission of a RRC Connection Request message reaches a specific value (e.g., V300 is greater than N300). The first reason could also be that access to a cell that the UE is camping on is barred, and the access barring may not be due to wait time (e.g., timer T302 is not running).

In one embodiment, logging the failure of the first RRC connection establishment procedure could include (i) logging the first reason, (ii) logging detailed location information of the UE, (iii) logging information (such as a cell ID) of a cell to which the first RRC connection establishment procedure is trying to connect, (iv) logging a timestamp, and/or (v) logging an indication that the error log is for RRC connection establishment procedure. In addition, the following information could be logged: (i) a number of preamble transmission within a Random Access (RA) procedure corresponding to the first RRC connection establishment, (ii) a reason for connection establishment, (iii) a status of a timer related to access baring (e.g., running or not), (iv) an applicability for a kind of access barring, (v) a target cell of the cell reselection, and/or (vi) a mobility state of the UE (e.g., if the detailed location information of the UE is not available). Furthermore, the logged information would be associated with the error log of the first RRC connection establishment failure.

In one embodiment, the second reason could be one or more reasons, including (i) an occurrence of cell reselection during the second RRC connection establishment procedure, (ii) a reception of a *RRCConnectionReject* message for the second RRC connection establishment procedure, and/or (iii) a reception of an information element "wait time" with the value zero (0) which is included in a RRC Connection Reject message. The second reason could also be that access to a cell that the UE is camping on is barred, and the access barring could be due to wait time (e.g., timer T302 is running).

Referring back to FIGS. 3 and 4, the device 300 includes a program code 312 stored in memory 310. In one embodiment, the CPU 308 could execute the program code 312 to log, in an error log, a failure of a first RRC (Radio Resource Control) connection establishment procedure caused by a first reason, and not logging a failure of a second RRC connection establishment procedure caused by a second reason.

In addition, the CPU 308 can execute the program code 312 to perform all of the above-described actions and steps or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for logging instances of a UE (User Equipment) (112, 116, 250) failing to establish connection, comprising:
**characterized by** logging, in an error log, a failure of a first RRC (Radio Resource Control) connection establishment procedure caused by a first reason, and not logging a failure of a second RRC connection establishment procedure caused by a second reason.

2. The method of claim 1, wherein the first reason includes one or more reasons including (i) a timer T300 expiry during the first RRC connection establishment procedure, (ii) access to a cell that the UE (112, 116, 250) is camping on is barred, (iii) an occurrence of cell reselection during the first RRC connection establishment procedure, and/or (iv) retry for the transmission of a RRC Connection Request message reaches a specific value.

3. The method of claim 2, further comprises:
logging, in the error log, one or more information including (i) a number of preamble transmission within a Random Access (RA) procedure corresponding to the first RRC connection establishment, (ii) a reason for connection establishment, (iii) a status of a timer related to access baring (e.g., running or not), (iv) an applicability for a kind of access barring, (v) a target cell of the cell reselection, and/or (vi) a mobility state of the UE (112, 116, 250); and
associating the logged information with the error log of the first RRC connection establishment failure.

4. The method of claim 2, wherein reaching the specific value is determined if V300 is greater than N300.

5. The method of claim 1, wherein logging the failure of the first RRC connection establishment procedure includes one or more actions including (i) logging the first reason, (ii) logging detailed location information of the UE (112, 116, 250), (iii) logging information (such as a cell ID) of a cell to which the first RRC connection establishment procedure is trying to connect, (iv) logging a timestamp, and/or (v) logging an indication that the error log is for RRC connection establishment procedure.

6. The method of claim 1, wherein the second reason includes one or more reasons including (i) access to a cell that the UE (112, 116, 250) is camping on is barred, (ii) an occurrence of cell reselection during the second RRC connection establishment procedure, (iii) a reception of a *RRCConnectionReject* message for the second RRC connection establishment procedure, and/or (iv) a reception of an information element "wait time" with the value zero (0) which is included in a RRC Connection Reject message.

7. The method of claim 6, wherein the access barring is due to wait time (e.g., timer T302 is running).

8. A communication device (300) for logging instances of a UE (User Equipment) (112, 116, 250) failing to establish connection, the communication device comprising:
a control circuit (306);
a processor (308) installed in the control circuit (306);
a memory (310) installed in the control circuit (306) and operatively coupled to the processor (308);
wherein the processor (308) is configured to execute a program code (312) stored in memory (310) to logging instances of a UE (User Equipment) (112, 116, 250) failing to establish connection **characterized by**:
logging, in an error log, a failure of a first RRC (Radio Resource Control) connection establishment procedure caused by a first reason, and not logging a failure of a second RRC connection establishment procedure caused by a second reason.

9. The communication device of claim 8, wherein the first reason includes one or more reasons including (i) a timer T300 expiry during the first RRC connection establishment procedure, (ii) access to a cell that the UE (112, 116, 250) is camping on is barred, (iii) an occurrence of cell reselection during the first RRC connection establishment procedure, and/or (iv) retry for the transmission of a RRC Connection Request message reaches a specific value.

10. The communication device of claim 9, further comprises:
logging, in the error log, one or more information including (i) a number of preamble transmission within a Random Access (RA) procedure corresponding to the first RRC connection establishment, (ii) a reason for connection establishment, (iii) a status of a timer related to access baring (e.g., running or not), (iv) an applicability for a kind of access barring, (v) a target cell of the cell reselection, and/or (vi) a mobility state of the UE (112, 116, 250); and
associating the logged information with the error log of the first RRC connection establishment failure.

11. The communication device of claim 9, wherein reaching the specific value is determined if V300 is greater than N300.

12. The communication device of claim 8, wherein logging the failure of the first RRC connection establishment procedure includes one or more actions including (i) logging the first reason, (ii) logging detailed location information of the UE (112, 116, 250), (iii) logging information (such as a cell ID) of a cell to which the first RRC connection establishment procedure is trying to connect, (iv) logging a timestamp, and/or (v) logging an indication that the error log is for RRC connection establishment procedure.

13. The communication device of claim 8, wherein the second reason includes one or more reasons including (i) access to a cell that the UE (112, 116, 250) is camping on is barred, (ii) an occurrence of cell reselection during the second RRC connection establishment procedure, (iii) a reception of a *RRCConnectionReject* message for the second RRC connection establishment procedure, and/or (iv) a reception of an information element "wait time" with the value zero (0) which is included in a RRC Connection Reject message.

14. The communication device of claim 13, wherein the access barring is due to wait time (e.g., timer T302 is running).
